(19) Europäisches Patentamt
European Patent Office
Office européen des brevets

(11) EP 0 646 602 B1

(12) **EUROPÄISCHE PATENTSCHRIFT**

(45) Veröffentlichungstag und Bekanntmachung des Hinweises auf die Patenterteilung:
**28.05.1997 Patentblatt 1997/22**

(51) Int. Cl.$^6$: **C08B 37/16**

(21) Anmeldenummer: **94115346.2**

(22) Anmeldetag: **29.09.1994**

# (54) Verfahren zur Herstellung von alkylierten Cyclodextrin-Derivaten, nach dem Verfahren herstellbare methylierte Cyclodextrin-Derivate und die Verwendung der Produkte

Process for the preparation of alkylated cyclodextrin derivatives, the methylated cyclodextrin derivatives obtainable from this process and the use of the products

Procédé pour la préparation de dérivés alcoylés de cyclodextrines, les dérivés méthylés de cyclodextrine ainsi obtenus et l'application de ces produits

(84) Benannte Vertragsstaaten:
**BE DE FR GB IT NL**

(30) Priorität: **01.10.1993 DE 4333598**

(43) Veröffentlichungstag der Anmeldung:
**05.04.1995 Patentblatt 1995/14**

(73) Patentinhaber: **Consortium für elektrochemische Industrie GmbH**
**D-81379 München (DE)**

(72) Erfinder: **Wimmer, Thomas, Dr.**
**D-81361 München (DE)**

(56) Entgegenhaltungen:
**EP-A- 0 193 850**
**WO-A-94/02516**
**GB-A- 869 192**

- **DATABASE WPI Week 8628, Derwent Publications Ltd., London, GB; AN 178870 & JP-A-61 111 302 (NIPPON SHOKUHIN KAK) 29. Mai 1986 & PATENT ABSTRACTS OF JAPAN vol. 10, no. 296 (C-377) 8. Oktober 1986**
- **STARKE., Bd.23, Nr.5, 1. Mai 1971, WEINHEIM DE Seiten 167 - 171 J. LAMMERS ET AL. 'Properties of Cyclodextrins'**
- **PATENT ABSTRACTS OF JAPAN vol. 12, no. 219 (C-506) 22. Juni 1988 & JP-A-63 017 895 (WAKO PURE CHEM IND LTD) 25. Januar 1988**
- **Chemical Abstracts Vol. 108, no 24, 1988, nr.206598h & JP-A-63 041 505**

EP 0 646 602 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.14.3/3.4

## Beschreibung

Die Erfindung betrifft Verfahren zur Herstellung von alkylierten Cyclodextrin-Derivaten, nach dem Verfahren herstellbare methylierte Cyclodextrin-Derivate und die Verwendung der Produkte.

Cyclodextrine sind cyclische Oligosaccharide, die aus 6, 7 oder 8 α(1-4)-verknüpften Anhydroglucoseeinheiten aufgebaut sind. Die durch enzymatische Stärkekonversion hergestellten α-, β- oder γ-Cyclodextrine unterscheiden sich in dem Durchmesser ihrer Kavität und eignen sich generell zum Einschluß von zahlreichen hydrophoben Gastmolekülen unterschiedlicher Größe. Die Anwendungen sind durch die geringen Löslichkeiten, speziell des β-Cyclodextrins (1.8% w/v in Wasser bei 25°C), limitiert.

Eine gängige Methode, die Löslichkeit zu erhöhen, ist die chemische Derivatisierung an den freien Hydroxylgruppen der Cyclodextrine. An den einzelnen Anhydroglucoseeinheiten können an der 2-, 3- und/oder 6-Position geeignete Substituenten eingeführt werden. Speziell die Methylierung von Cyclodextrinen liefert Produkte, die sowohl in Wasser als auch in organischen Lösungsmitteln eine gute Löslichkeit haben.

Gemische an methylierten Cyclodextrinen werden durch ihren durchschnittlichen Substitutionsgrad (DS-Wert; average degree of substitution) charakterisiert. Der DS-Wert gibt an, wieviele Substituenten im Schnitt pro Anhydroglucose gebunden sind. Auf Grund ihrer Struktur können Cyclodextrine an der O2-, O3- und/oder an der O6-Position substituiert werden.

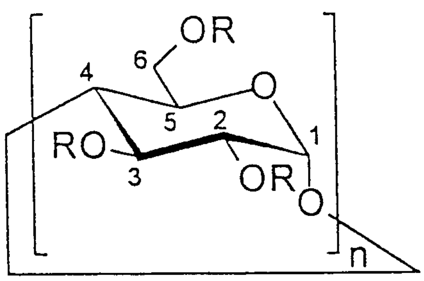

n = 6 α-Cyclodextrin
n = 7 ß-Cyclodextrin
n = 8 γ-Cyclodextrin

R = H oder $CH_3$

Die Bestimmung des DS-Wertes ist beispielsweise dadurch möglich, daß die Produkte zu den Glucoseeinheiten hydrolysiert und durch Reduktion und Acetylierung zu den D-Glucitolacetaten umgewandelt (T. Tanimoto, Y. Kubota, N. Nakanishi, K. Koizumi, Chem. Pharm. Bull. 38(2), pp 318-322 (1990)) werden. Eine gaschromatographische Auftrennung liefert die molaren Anteile der im folgenden aufgelisteten, insgesamt 8 theoretisch möglichen Glucoseeinheiten in den jeweiligen Cyclodextrin-Derivaten.

| Anzahl der Methoxygruppen | Bezeichnung | D-Glucitolacetat |
|---|---|---|
| 0 | S0 | D-Glucitol-hexaacetat |
| 1 | S2 | 1,3,4,5,6-Penta-O-acetyl-2-mono-O-methyl-D-Glucitol |
| 1 | S3 | 1,2,4,5,6-Penta-O-acetyl-3-mono-O-methyl-D-Glucitol |
| 1 | S6 | 1,2,3,4,5-Penta-O-acetyl-6-mono-O-methyl-D-Glucitol |
| 2 | S2,3 | 1,4,5,6-Tetra-O-acetyl-2,3-di-O-methyl-D-Glucitol |
| 2 | S2,6 | 1,3,4,5-Tetra-O-acetyl-2,6-di-O-methyl-D-Glucitol |
| 2 | S3,6 | 1,2,4,5-Tetra-O-acetyl-3,6-di-O-methyl-D-Glucitol |
| 3 | S2,3,6 | 1,4,5-Tri-O-acetyl-2,3,6-tri-O-methyl-D-Glucitol |

Aus den ermittelten mol%-Anteilen der jeweiligen Glucoseeinheiten läßt sich auch der durchschnittliche Substitutionsgrad der einzelnen Positionen errechnen. Diese mittlere Wahrscheinlichkeit X einer Substitution in einer bestimmten Position errechnet sich wie im folgenden für X6 (mittlere Wahrscheinlichkeit einer Substitution in der O6-Position) dargestellt:

$$X6 = mol\%\ S6 + mol\%\ S2,6 + mol\%\ S3,6 + mol\%\ S2,3,6;$$

Analog lassen sich die durchschnittlichen Substitutionsgrade für eine Substitution in O2- und O3-Position berechnen.

Als partiell methylierte Produkte sind beispielsweise Hexakis-(2,6-di-O-methyl)-α-Cyclodextrin, Heptakis-(2,6-di-O-methyl)-β-Cyclodextrin und Oktakis-(2,6-di-O-methyl)-γ-Cyclodextrin (je 66 % Methoxygruppen, DS = 2) bekannt. Diese selektiv substituieren Cyclodextrine werden durch Methylierung mit Methyliodid oder Dimethylsulfat in organischen Lösungsmitteln wie Dimethylsulfoxid und/oder N,N-Dimethylformamid in Gegenwart von starken Basen wie Barium- oder Natriumhydroxid hergestellt (siehe beispielsweise US 4,542,211; J. Pitha, Life Sci. 29, 307-311 (1981); T. Tanimoto, Y. Kubota, N. Nakanishi, K. Koizumi, Chem. Pharm. Bull. 38(2), pp. 318-322 (1990)).

Neben dem hohen Aufwand bei Synthese und Reinigung steht auch die stark abnehmende Wasserlöslichkeit mit zunehmender Temperatur (J. Szejtli in Cyclodextrin Technology, Kluwer Academic Publishers, Dordrecht/Boston/London, 1988, p. 53) einer breiten industriellen Nutzung dieser selektiv methylierten Cyclodextrinderivate entgegen.

Im US-Patent 4,764,604 oder auch US 4,870,060 wird die Herstellung eines methylierten γ-Cyclodextrins mit einem DS-Wert von 1,49 in einer 1,2-Dimethoxyethan-Wasser-Mischung mit der 100-fachen molaren Menge an Methylchlorid bei 120°C beschrieben.

In der Patentschrift DD 294 267 werden Gemische hochmethylierter Cyclodextrine mit einem Schmelzpunkt < 100°C beschrieben, die durch Methylierung in einem organischem Lösungsmittel erhalten wurden.

Ebenfalls in organischen Lösungsmitteln, wie z.B. Tetrahydrofuran, werden α-, β- oder γ-Cyclodextrine unter Phasentransferkatalyse mit Dimethylsulfat hergestellt (CA 108(10): 77532f).

Aus toxikologischen und ökologischen Gründen ist bei der Herstellung von Cyclodextrin-Derivaten eine Vermeidung von organischen Lösungsmitteln, wie sie in den genannten Schriften zur Herstellung der Derivate verwendet werden, wünschenswert.

Bei allen bisher beschriebenen Cyclodextrin-Derivaten nimmt mit steigender Temperatur die Wasserlöslichkeit ab.

In der Patentschrift EP-B1-0193580 werden Mischungen partiell methylierter Cyclodextrine offenbart, die eine erhöhte Löslichkeit in Wasser bei zunehmender Temperatur haben. Die maximale Wasserlöslichkeit des Produkts beträgt 130 bis 133 g/100 ml $H_2O$ bei 25°C bzw. etwa 160 g/100 ml $H_2O$ bei 70°C. Zu ihrer Herstellung wird β-Cyclodextrin in wässriger Natronlauge mit mindestens 30, bevorzugt 100-200 molaren Equivalenten an Dimethylsulfat methyliert. Das erhaltene Produkt ist in 2-Position zu mindestens 90 %, in 3-Position zu 25-33 % und in 6-Position zu mindestens 95 % methyliert.

Ähnliche Verfahren zur Methylierung werden in CA 108(24): 206598h und CA 109(13): 110838f beschrieben.

Die speziell in den letztgenannten Schriften verwendeten enormen Überschüße an krebserregendem Dimethylsulfat wirken sich negativ auf die Wirtschaftlichkeit der Verfahren aus. CA 108(24):206598h beschreibt ein Verfahren zur Methylierung von β-Cyclodextrin in einer wäßrigen Lösung von NaOH mit einer Konzentration von mindestens 10 Gew.%.

Bei den erhaltenen Produkten sind die O2-Position zur 52 bis 64%, die O3-Position zu 38-51% und die O6-Position zu 70-100% methyliert.

Aufgabe der Erfindung war es, ein wirtschaftliches Verfahren zur Herstellung von alkylierten Cyclodextrin-Derivaten bereitzustellen.

Eine weitere Aufgabe der Erfindung war es, nach dem erfindungsgemäßen Verfahren herstellbare, sehr gut wasserlösliche methylierte Cyclodextrin-Derivate mit im Vergleich zu bekannten methylierten Cyclodextrinen verbesserten Eigenschaften bereitzustellen.

Die Aufgabe wird gelöst durch ein Verfahren, bei dem α-, β- und/oder γ-Cyclodextrin in einer geeigneten Base mit einem geeigneten O-Alkylierungsmittel umgesetzt werden und anschließend ggf. nach Neutralisation des Reaktionsansatzes die erhaltenen alkylierten Cyclodextrin-Derivate aus dem Reaktionsansatz in an sich bekannter Weise abgetrennt werden dadurch gekennzeichnet, daß α-, β- und/oder γ-Cyclodextrin zunächst in einem Teil der Base gelöst werden und anschließend das O-Alkylierungsmittel sowie weitere Base zugegeben wird.

Im erfindungsgemäßen Verfahren sind α-, β- und/oder γ-Cyclodextrin wie sie käuflich erhältlich sind einsetzbar. Die Cyclodextrine können jedoch ebenso in an sich bekannter Weise, beispielsweise durch enzymatische Umsetzung von Stärke mit Cyclodextrin Glycosyltransferase (CGTase E.C.2.4.1.19), hergestellt werden.

Geeignete Basen sind beispielsweise Alkalihydroxide, Erdalkalihydroxide oder deren Mischungen. Vorzugsweise geeignet sind Alkalihydroxide.

Als Alkalihydroxid wird vorzugsweise Kalium- und/oder Natriumhydroxid, besonders bevorzugt Natriumhydroxid verwendet.

Als O-Alkylierungsmittel sind vorzugsweise $C_1$-$C_2$-Alkylchloride, $C_1$-$C_6$-Alkylbromide, $C_1$-$C_6$-Alkyliodide, Dialkylsulfate, α-Chlorcarbonsäuren und deren Salze, Epichlorhydrin sowie Verbindungen der allgemeinen Formel

$Cl-CH_2-C(OH)H-CH_2-R_1$,

wobei $R_1$: $N^+R^2_3$, $SO^-_3$
und $R^2$ ein $C_1$-$C_3$ Alkylrest ist, geeignet.

Vorzugsweise geeignet sind Methylchlorid, Dimethylsulfat, 3-Chlor-2-Hydroxypropyltrimethylammoniumchlorid, Chloressigsäure und deren Na-Salz, Epichlorhydrin.

Besonders bevorzugt geeignet ist Methylchlorid, Epichlorhydrin, Chloressigsäure-Natriumsalz.

Vorzugsweise werden pro Mol Cyclodextrin 15-25 mol, bevorzugt 17 - 21 mol, der geeigneten Base sowie 15-25 mol, bevorzugt 17-21 mol, des O-Alkylierungsmittels eingesetzt.

Die vorzugsweise gesamte Cyclodextrinmenge wird in einer wäßrigen Lösung der genannten Base einer Konzentration von 5-20 % (w/w), bevorzugt 8-12% (w/w), und einer Menge von 1-5 mol, bevorzugt 2-3 mol, der eingesetzten Base pro mol Cyclodextrin gelöst.

Die restliche Menge an Base wird anschließend bevorzugt gleichzeitig mit dem O-Alkylierungsmittel zudosiert. Die Dosierung von O-Alkylierungsmittel und Base erfolgt portionsweise oder kontinuierlich, wobei die kontinuierliche Dosierung bevorzugt ist.

Die kontinuierliche Dosierung erfolgt vorzugsweise über einen Zeitraum von bis zu 2/3 der gesamten Reaktionszeit.

Die bevorzugt gleichzeitig mit dem O-Alkylierungsmittel zudosierte Base wird als Feststoff oder als wäßrige Lösung zugegeben. Vorzugsweise wird eine wäßrige Lösung einer Konzentration von 20-60 % eingesetzt. Besonders geeignet ist eine 50 %ige wässrige Lösung (w/w).

Überschüssiges O-Alkylierungsmittel kann nach beendeter Reaktion leicht in an sich bekannter Weise, beispielsweise durch Anlegen von Vakuum (10-100 mm $H_20$), entfernt werden.

Die Reaktion wird nach Lösen des Cyclodextrins, vorzugsweise bei einer Temperatur von 50-100°C, besonders bevorzugt bei 60-80°C, und einem Druck von 2-10 bar, insbesondere bei 4-6 bar, durchgeführt. Die Reaktionszeit ist temperaturabhängig. Sie beträgt etwa 5-30 h. In der Regel ist die Reaktion nach etwa 10-15 h beendet.

Nach beendeter Reaktion wird die neutrale bis leicht alkalische Lösung, falls erforderlich, durch Säurezugabe neutralisiert. Hierfür sind besonders Mineralsäuren, insbesondere Phosphor-, Schwefel- oder/und Salzsäure geeignet. Besonders geeignet ist Salzsäure mit einer Konzentration von 5 bis 25 % (w/w).

Das erfindungsgemäße Verfahren hat gegenüber bekannten Verfahren den Vorteil, daß keine organischen Lösungsmittel eingesetzt werden. Ein weiterer Vorteil des erfindungsgemäßen Verfahrens ist es, daß erheblich geringere Mengen an Base und o-Alkylierungsmittel eingesetzt werden müssen, um einen bestimmten durchschnittlichen Alkylierungsgrad des Produktes zu erreichen.

Die Abtrennung der erhaltenen Cyclodextrin-Derivate von anorganischen Salzen wird in an sich bekannter Weise durchgeführt. Beispiele für bekannte Verfahren sind Ionenaustauschchromatographie (siehe z.B. US 4.764.604) oder die Extraktion mit einem organischen Lösungsmittel wie Methylenchlorid oder Chloroform.

Eine weitere Aufreinigung der Cyclodextrin-Derivate erfolgt, falls erwünscht, mittels an sich bekannter Verfahren wie beispielsweise Entfärbung mit Aktivkohle, Adsorptionschromatographie an Aktivkohle, Kieselgel, Aluminiumhydroxid.

Die nach dem erfindungsgemäßen Verfahren erhaltenen Gemische an alkylierten Cyclodextrinen werden beispielsweise durch ihren durchschnittlichen Substitutionsgrad (DS-Wert) charakterisiert.

Nach dem erfindungsgemäßen Verfahren werden bei Umsetzung von $\alpha$-, $\beta$- und/oder $\gamma$-Cyclodextrin in wässriger Alkalilauge mit Methylchlorid erstaunlicherweise ausschließlich methylierte Cyclodextrin-Derivate erhalten, die einen DS-Wert zwischen 1,7 und 1,95 haben und deren O6-Position zu 55 bis 75 % methyliert ist.

Die weitere Aufgabe der Erfindung wird gelöst durch methylierte Cyclodextrin-Derivate, die dadurch gekennzeichnet sind, daß der mittlere Substitutionsgrad (DS), gemessen durch $^1$H-NMR-Spektroskopie, zwischen 1,7 und 1,95 liegt und die O6-Position zu 55 bis 75 % methyliert ist.

Besonders bevorzugt sind Methyl-$\beta$-Cyclodextrine und Methyl-$\gamma$-Cyclodextrine die einem mittleren Substitutionsgrad (DS), gemessen durch $^1$H-NMR-Spektroskopie, zwischen 1,7 und 1,9 haben und bei denen die O2- und die O6-Position zu durchschnittlich 60 bis 70 % methyliert sind, sowie Methyl-$\alpha$-Cyclodextrin mit einem durchschnittlichen Substitutionsgrad (DS), gemessen durch $^1$H-NMR-Spektroskopie, zwischen 1,7 und 1,9 und mit einem durchschnittlichen Methylierungsgrad der O2-Position von 70 bis 80 % und mit einem durchschnittlichen Methylierungsgrad der O6-Position von 60 bis 70 %.

Von den erfindungsgemäßen Cyclodextrin-Derivaten lassen sich in einem Temperaturbereich von 20 bis 100°C über 200 g in 100 ml Wasser lösen. Mit zunehmender Temperatur steigt zudem die Wasserlöslichkeit der erfindungsgemäßen Cyclodextrinderivate auf Werte bis zu 250 g/100 ml $H_2O$ an. Sie sind damit erheblich besser wasserlöslich als bekannte methylierte Cyclodextrinderivate. Die erfindungsgemäßen Cyclodextrin-Derivate besitzen zudem den Vorteil einer erhöhten Solubilisierungskapazität für schwer wasserlösliche Substanzen wie beispielsweise Steroide.

Die als bevorzugt und besonders bevorzugt genannten Cyclodextrin-Derivate besitzen die beste Löslichkeit und die maximale Solubilisierungskapazität. Sie eignen sich zudem in der Regel am besten für die im folgenden genannten

Verwendungen.

Die nach dem erfindungsgemäßen Verfahren erhaltenen Cyclodextrin-Derivate eignen sich für alle bekannten Anwendungen von Cyclodextrinen und Cyclodextrin-Derivaten.
Die erfindungsgemäßen methylierten Cyclodextrin-Derivate eignen sich insbesondere

- zur Solubilisierung von schwer wasserlöslichen Verbindungen wie beispielsweise Steroiden,
- als Formulierungshilfsmittel in pharmazeutischen, kosmetischen und agrochemischen Produkten,
- zur Stabilisierung von licht- oder oxidationsempfindlichen Stoffen,
- zur Entfettung und Reinigung von beliebigen Oberflächen,
- zum Ersatz von organischen Lösungsmitteln insbesondere bei der Trennung und Extraktion von Substanzen aus lipophilen Medien,
- als Hilfsstoffe, insbesondere bei der Beschichtung und/oder Haftvermittlung in der Papier-, Leder- und Textilindustrie,
- als Phasentransfer-Katalysator
- sowie zur Geschmacks- und Geruchsmaskierung.

Die folgenden Beispiele dienen der weiteren Erläuterung der Erfindung

**Beispiel 1**

Herstellung von Methyl-β-Cyclodextrin

In einem druckfesten 100 l-Rührbehälter wurden 12,5 kg feuchtes β-Cyclodextrin (9 % Wasser, 10 mol) (käuflich erhältlich unter der Bezeichnung BETA W7 bei Wacker-Chemie; 81737 München) in 10 kg einer 10 %igen, wässrigen Natronlauge gelöst. Die Reaktionsmischung wurde auf 80°C erhitzt und 9,8 kg Methylchlorid kontinuierlich über 7 h bis zu einem Druck von etwa 5 bar zudosiert. Gleichzeitig wurden im Laufe der 7 h 13 kg einer 50 %igen Natronlauge zugegeben. Nach 12 h wurde mit 15 % (w/w) Salzsäure neutralisiert und das Produkt mit 30 kg Chloroform extrahiert. Nach der Phasentrennung wurde die organische Phase abgetrennt und das Lösungsmittel bei Normaldruck abdestilliert.

Ausbeute: ca. 12 kg Methyl-β-Cyclodextrin (Substituentenverteilung siehe Tabelle 1)
Löslichkeit: 200 g/100 ml Wasser bei 25°C, >200g/100 ml Wasser bei 80°C
DS ermittelt mittels $^1$H-NMR-Spektroskopie: 1,74

**Beispiel 2**

Herstellung von Methyl-γ-Cyclodextrin

Methyl-γ-Cyclodextrin wurde, wie in Beispiel 1 beschrieben, hergestellt, wobei anstelle des β-Cyclodextrins γ-Cyclodextrin (käuflich erhältlich unter der Bezeichnung GAMMA W8 bei Wacker Chemie; 81737 München) eingesetzt wurde und die Reaktion bei einer Temperatur von 60°C durchgeführt wurde.

Ausbeute: ca. 11 kg Methyl-β-Cyclodextrin (Substituentenverteilung siehe Tabelle 1)
Löslichkeit: 200 g/100 ml Wasser bei 25°C, >200 g/100 ml Wasser bei 80°C
DS ermittelt mittels $^1$H-NMR-Spektroskopie: 1,78.

**Beispiel 3**

Herstellung von Methyl-α-Cyclodextrin

Methyl-α-Cyclodextrin wurde, wie in Beispiel 1 beschrieben, hergestellt, wobei anstelle des β-Cyclodextrins α-Cyclodextrin (käuflich erhältlich unter der Bezeichnung ALPHA W6 bei Wacker Chemie; 81737 München) eingesetzt wurde und die Reaktion bei einer Temperatur von 70°C durchgeführt wurde.

Ausbeute: ca. 12 kg Methyl-α-Cyclodextrin (Substituentenzusammensetzung siehe Tabelle 1)
Löslichkeit: 200 g/100 ml Wasser bei 25°C, >200 g/100 ml Wasser bei 80°C
DS ermittelt mittels $^1$H-NMR-Spektroskopie: 1,76;

**Vergleichsbespiel 1:**

Herstellung von Methyl-β-Cyclodextrin ohne Laugendosierung

In einer Lösung von 6,0 kg Natriumhydroxid in 12 kg Wasser wurden 7,2 kg β-Cyclodextrin (13 % Wasser) (käuflich erhältlich unter der Bezeichnung BETA W7 bei Wacker-Chemie; 81737 München) gelöst und in einem Autoklaven auf 60°C erwärmt. Bei einem Druck von maximal 7 bar und einer Reaktionstemperatur von 60°C wurden über 28 Stunden 7,2 kg Methylchlorid zudosiert. Der Ansatz wurde mit 10 %iger Schwefelsäure neutralisiert und das Produkt mit 18 kg Methylenchlorid extrahiert. Die organische Phase, die das salzfreie Produkt enthält, wurde in einem Scheidetrichter abgetrennt. Das Lösungsmittel wurde abdestilliert. Der feste Rückstand wurde in 15 kg Wasser gelöst und die wässrige Lösung sprühgetrocknet.

Es wurden 6,8 kg Methyl-β-Cyclodextrin erhalten.
Die Substituentenverteilung ist in Tabelle 1 aufgelistet, der DS-Wert, ermittelt mittels $^1H$-NMR-Spektroskopie, betrug 1,75.

**Vergleichsbeispiel 2:**

Partiell methylierte β-Cyclodextrine wurden wie in EP-0193850, Beispiel 1, beschrieben hergestellt. Diese β-Cyclodextrine haben bei 25°C eine Löslichkeit von ca. 133 g/ 100 ml Wasser. Die Substituentenverteilung ist in Tabelle 1 aufgelistet, der DS-Wert, ermittelt mittels $^1H$-NMR-Spektroskopie, betrug 2,21.

**Beispiel 4**

Bestimmung der Substituentenverteilung

2 mg des methylierten Cyclodextrins aus den Beispielen 1 bis 3 sowie Vergleichsbeispiel 2 werden mit 4 ml einer 2 M Trifluoressigsäure 4 Stunden bei 110°C hydrolysiert. Die Lösung wurde jeweils zur Trockene gebracht und mit 0,25 ml einer 0,5 M $NaBH_4$-Lösung in 1,5 M Ammoniaklösung 1 Stunde auf 60°C erhitzt. Der Überschuß des Reduktionsmittels wurde durch Eisessig zerstört, die entstandene Borsäure durch Abrauchen mit Methanol entfernt. Der Rückstand wurde in Pyridin mit Essigsäureanhydrid acetyliert. Nach Hydrolyse mit 2 ml gesättigter Natriumhydrogencarbonat-Lösung wurde mit Chloroform extrahiert und der Extrakt gaschromatographisch aufgetrennt. Die Zuordnung der acht möglichen Glucitolacetate wurde durch GC-MS-Kopplung abgesichert. Die Auswertung der Peakflächen liefert die Substituentenverteilung (Tabelle 1).

Tabelle 1

| Substituentenverteilung, Angaben in mol% | | | | | | | | | |
|---|---|---|---|---|---|---|---|---|---|
| Bsp. | SO | S2 | S3 | S6 | S2,3 | S2,6 | S3,6 | S2,3,6 | X6 | X2 |
| B1 | 6.8 | 15.8 | 5.2 | 13.4 | 8.1 | 24.4 | 11.0 | 15.3 | 64.1 | 63.6 |
| B2 | 6.4 | 13.0 | 6.1 | 12.7 | 7.1 | 25.9 | 12.1 | 16.7 | 67.4 | 62.7 |
| B3 | 10.7 | 21.7 | 1.4 | 10.5 | 5.1 | 38.6 | 2.2 | 9.8 | 61.1 | 75.2 |
| V1 | 6.0 | 7.5 | 4.6 | 19.9 | 4.4 | 26.8 | 14.5 | 16.3 | 77.5 | 55.0 |
| V2 | 0.5 | 0.6 | 0.3 | 21.3 | 0.4 | 35.4 | 15.8 | 25.7 | 98.2 | 62.1 |

**Beispiel 5**

Bestimmung der Solubilisierungskapazität

Es wurden 10 %ige (w/w) wässrige Lösungen von Methyl-β-Cyclodextrin aus Bsp. 1 bzw. Vbsp. 1 mit einem Überschuß an Hydrocortison 24 h bei 25°C geschüttelt. Nicht gelöstes Hydrocortison wurde durch Filtration mit einem Membranfilter (0,2 µm) abgetrennt. Im Filtrat wurde die Hydrocortison-Konzentration mittels HPLC bestimmt. Bei Verwendung des Methyl-β-Cyclodextrins aus Bsp. 1 ließen sich 17 mg Hydrocortison pro ml 10 %ige wässrige CD-Lösung solubilisieren, bei Verwendung des Methyl-β-Cyclodextrins aus Vbsp. 1 ließen sich 14,1 mg Hydrocortison pro

ml 10 %ige wässrige CD-Lösung solubilisieren.

## Patentansprüche

1. Verfahren, bei dem α-, β- und/oder γ-Cyclodextrin in einer geeigneten Base mit einem geeigneten O-Alkylierungsmittel umgesetzt werden und anschließend ggf. nach Neutralisation des Reaktionsansatzes die erhaltenen alkylierten Cyclodextrin-Derivate aus dem Reaktionsansatz in an sich bekannter Weise abgetrennt werden, dadurch gekennzeichnet, daß α-, β- und/oder γ-Cyclodextrin zunächst in 1 bis 5 mol einer geeigneten Base in Form ihrer wässrigen Lösung in einer Konzentration von 5-20 % (w/w) pro mol Cyclodextrin gelöst werden und anschließend gleichzeitig oder in beliebiger Reihenfolge portionsweise oder kontinuierlich 15 bis 25 mol des O-Alkylierungsmittels sowie bis zu einer maximalen Basenkonzentration von 15 bis 25 mol die geeignete Base zugegeben werden.

2. Verfahren gemäß Anspruch 1, dadurch gekennzeichnet, daß das O-Alkylierungsmittel sowie die weitere Base gleichzeitig und kontinuierlich zugegeben werden.

3. Verfahren gemäß einem oder mehreren der Ansprüche 1 bis 2, dadurch gekennzeichnet, daß als geeignete Base Kalium und/oder Natriumhydroxid eingesetzt wird.

4. Verfahren gemäß einem oder mehreren der Ansprüche 1 bis 3, dadurch gekennzeichnet, daß als O-Alkylierungsmittel Methylchlorid, Epichlorhydrin und/oder Chloressigsäure-Natriumsalz eingesetzt werden.

5. Methyl-γ-Cyclodextrin mit einem mittleren Substitutionsgrad (DS), gemessen durch $^1$H-NMR-Spektroskopie, zwischen 1,7 und 1,9 und mit einem durchschnittlichen Methylierungsgrad der O2- und der O6-Position von 60 bis 70 %.

6. Methyl-α-Cyclodextrin mit einem durchschnittlichen Substitutionsgrad (DS), gemessen durch $^1$H-NMR-Spektroskopie, zwischen 1,7 und 1,9 und mit einem durchschnittlichen Methylierungsgrad der O2-Position von 70 bis 80 % und mit einem durchschnittlichen Methylierungsgrad der O6-Position von 60 bis 70 %.

7. Verwendung von methylierten Cyclodextrin-Derivaten gemäß einem oder mehreren der Ansprüche 5 oder 6 zur Solubilisierung von in Wasser schwerlöslichen Substanzen.

## Claims

1. Process in which α-, β- and/or γ-cyclodextrin are reacted, in a suitable base, with a suitable O-alkylating agent and, where appropriate following neutralization of the reaction mixture, the resulting alkylated cyclodextrin derivatives are subsequently separated, in a manner known per se, out of the reaction mixture, characterized in that α-, β- and/or γ-cyclodextrin are initially dissolved in from 1 to 5 mol of a suitable base in the form of its aqueous solution, in a concentration of 5-20% (w/w), per mole of cyclodextrin, and from 15 to 25 mol of the O-alkylating agent as well as the suitable base, up to a maximum base concentration of from 15 to 25 mol, are subsequently added, either simultaneously or in arbitrary sequence, batchwise or continuously.

2. Process according to Claim 1, characterized in that the O-alkylating agent and the additional base are added simultaneously and continuously.

3. Process according to one or more of Claims 1 to 2, characterized in that potassium and/or sodium hydroxide is/are employed as the suitable base.

4. Process according to one or more of Claims 1 to 3, characterized in that methyl chloride, epichlorohydrin and/or sodium chloroacetate is/are employed as the O-alkylating agent.

5. Methyl-γ-cyclodextrin having an average degree of substitution (DS), measured by means of $^1$H-NMR spectroscopy, of between 1.7 and 1.9 and having an average degree of methylation of the O2 and the O6 positions of from 60 to 70%.

6. Methyl-α-cyclodextrin having an average degree of substitution (DS), measured by means of $^1$H-NMR spectroscopy, of between 1.7 and 1.9 and having an average degree of methylation of the O2 position of from 70 to 80% and having an average degree of methylation of the O6 position of from 60 to 70%.

7. Use of methylated cyclodextrin derivatives according to one or more of Claims 5 or 6 for solubilizing substances which are difficult to dissolve in water.

**Revendications**

1. Procédé dans lequel on fait réagir les α-,β-et/ou γ-cyclodextrines, dans une base appropriée, avec un agent d'O-alcoylation approprié et ensuite, facultativement après neutralisation du mélange réactionnel, on sépare les dérivés obtenus de cyclodextrines alcoylées du mélange réactionnel, de manière connue, caractérisé en ce que les α-, β- et γ-cyclodextrines sont d'abord dissoutes dans 1 à 5 moles d'une base appropriée, sous forme d'une solution aqueuse à une concentration de 5-20% (p/p) par mole de cyclodextrine, et ensuite, simultanément ou en ordre quelconque (par fractions ou de manière continue), on ajoute 15 à 25 moles d'agent d'O-alcoylation ainsi que la base appropriée jusqu'à une concentration maximale en base de 15 à 25 moles.

2. Procédé suivant la revendication 1, caractérisé en ce que l'agent d'O-alcoylation ainsi que la base supplémentaire sont ajoutés simultanément ou de manière continue.

3. Procédé suivant l'une ou plusieurs des revendications 1 et 2, caractérisé en ce que l'on utilise de l'hydroxyde de sodium et/ou de potassium comme base appropriée.

4. Procédé suivant l'une ou plusieurs des revendications 1 à 3, caractérisé en ce que l'on utilise du chlorure de méthyle, de l'épichlorhydrine et/ou le sel sodique de l'acide chloroacétique comme agent d'O-alcoylation.

5. Méthyl-γ-cyclodextrine avec un taux moyen de substitution (TS), mesuré par spectroscopie RMN $^1H$ entre 1,7 et 1,9 et avec un taux moyen de méthylation en positions O2 et O6 de 60 à 70%.

6. Méthyl-α-cyclodextrine avec un taux moyen de substitution (TS), mesuré par spectroscopie RMN $^1H$ entre 1,7 et 1,9 et avec un taux moyen de méthylation en position O2 de 70 à 80% et avec un taux moyen de méthylation en position O6 de 60 à 70%.

7. Utilisation de dérivés méthylés de cyclodextrines suivant l'une ou plusieurs des revendications 5 ou 6 pour la solubilisation de substances difficilement solubles dans l'eau.